Europäisches Patentamt

European Patent Office

Office européen des brevets

(11) Veröffentlichungsnummer: **0 547 339 B1**

## EUROPÄISCHE PATENTSCHRIFT

(45) Veröffentlichungstag der Patentschrift: **14.06.95**

(21) Anmeldenummer: **92118378.6**

(22) Anmeldetag: **28.10.92**

(51) Int. Cl.⁶: **F02F 11/00**, F16J 15/08

(54) Zylinderkopfdichtung und Zylinderlaufbüchse für Hubkolbenmaschinen, insbesondere Brennkraftmachinen.

(30) Priorität: **19.12.91 DE 4142031**

(43) Veröffentlichungstag der Anmeldung:
**23.06.93 Patentblatt 93/25**

(45) Bekanntmachung des Hinweises auf die
Patenterteilung:
**14.06.95 Patentblatt 95/24**

(84) Benannte Vertragsstaaten:
**CH DE FR GB IT LI SE**

(56) Entgegenhaltungen:
**DE-A- 3 922 885**
**FR-A- 926 949**
**FR-A- 2 619 599**

(73) Patentinhaber: **MAN Nutzfahrzeuge Aktiengesellschaft**
**Postfach 50 06 20**
**D-80976 München (DE)**

(72) Erfinder: **Kubis, Heribert, Dipl.-Ing.**
**Heisterstrasse 37**
**W-8500 Nürnberg 70 (DE)**
Erfinder: **Winter, Josef**
**Lerchenweg 17 b**
**W-8540 Rednitzhembach (DE)**

## Beschreibung

Die Erfindung bezieht sich auf eine Zylinderkopfdichtung und Zylinderlaufbüchse gemäß dem Gattungsbegriff.

Bei hochaufgeladenen Brennkraftmaschinen mit den daraus resultierenden hohen Druckkräften auf den Zylinderkopf bereitet dessen Abdichtung zunehmend Probleme. Zu deren Lösung wurde vorgeschlagen die Zylinderkopfdichtung plastisch über die Werkstoff-Fließgrenze hinaus zu verformen. In diesem Bereich ist die von den Zylinderkopfschrauben auf die Zylinderkopfdichtung übertragene Vorspannkraft (Dichtkraft) weitgehend von Maßtoleranzen unabhängig und allein durch die Werkstoff-Festigkeit vorgegeben. Hierdurch ist der Anteil der Schraubenkraft, der in die Zylinderkopfdichtung eingeleitet wird klar definiert. Diesen Vorteilen stehen jedoch Probleme hinsichtlich Zentrierung des Dichtringes gegenüber, da einerseits eine geringe Toleranz des radialen Spiels zu einer Behinderung des plastischen Verformungsvorganges führt und bei Ausschöpfung des Spiels ein sogenannter hydrostatischer Spannungszustand eintritt, andererseits führt ein zu großes radiales Spiel durch Verschiebung des Rings zu einer nicht mehr radial symmetrischen Belastung des Ringes und somit zu einer unerwünschten Streubreite der Dichtkraft auf den Stirnflächen der Dichtung (DE-OS 39 22 885).

Ausgehend von einer Zylinderkopfdichtung und Zylinderlaufbüchse entsprechend dem Gattungsbegriff liegt der Erfindung die Aufgabe zugrunde, die Zentrierung zu gewährleisten, ohne daß die plastische Verformung gestört wird.

Gelöst wird diese Aufgabe durch die kennzeichnenden Merkmale des Patentanspruches 1.

Dadurch, daß der Führungsbereich auf halber Ringhöhe keine nennenswerte Verformung erfährt und nur die geringe Höhe "B" hat, kann das radiale Spiel sehr klein gewählt werden, wodurch die Zentrierung genauer wird. Nach Ausschöpfung des an sich kleinen Spiels im Lauf der Verformung kommt der Ring nur im Bereich "B" zur Anlage mit der Zentrierung, jedoch wird durch die stetige Vergrößerung des radialen Spiels ausgehend vom Bereich "B" eine Behinderung des Fließvorganges der von den Stirnflächen des Rings her erfolgt vermieden.

Vorteilhafte Ausbildungen des vom Führungsbereich "B" ausgehenden und sich vergrößernden Freiraumes zwischen Ring und Zentrierung sind den Ansprüchen 2 bis 5 entnehmbar.

Da in allen Fällen der Führungsbereich "B" sehr schmal gehalten wird und der Freiraum vom Bereich "B" ausgehend erfindungsgemäß zunimmt wird die Zentrierung verbessert, ohne daß durch diese Zentrierung die Fließverformung behindert wird. Gleichzeitig wird die Bearbeitung vereinfacht, da eine genauere Durchmessertoleranz lediglich im Bereich "B" vorliegen muß.

Ausführungsbeispiele der Erfindung sind in Zeichnungen dargestellt. Es zeigt:

Figur 1    einen Ring mit Zentrierung im Bereich "B" und Freiraum für die plastische Deformation unter- und oberhalb Bereich "B"

Figur 2    einen Ring und je eine umlaufende Nut in einer Zylinderlaufbüchse sowie im Zylinderkopf

Figur 3    einen Ring und eine ringförmige Aussparung in der Zylinderlaufbüchse

Figur 4    einen Ring mit Führungsbereich "B" in der Zylinderlaufbüchse

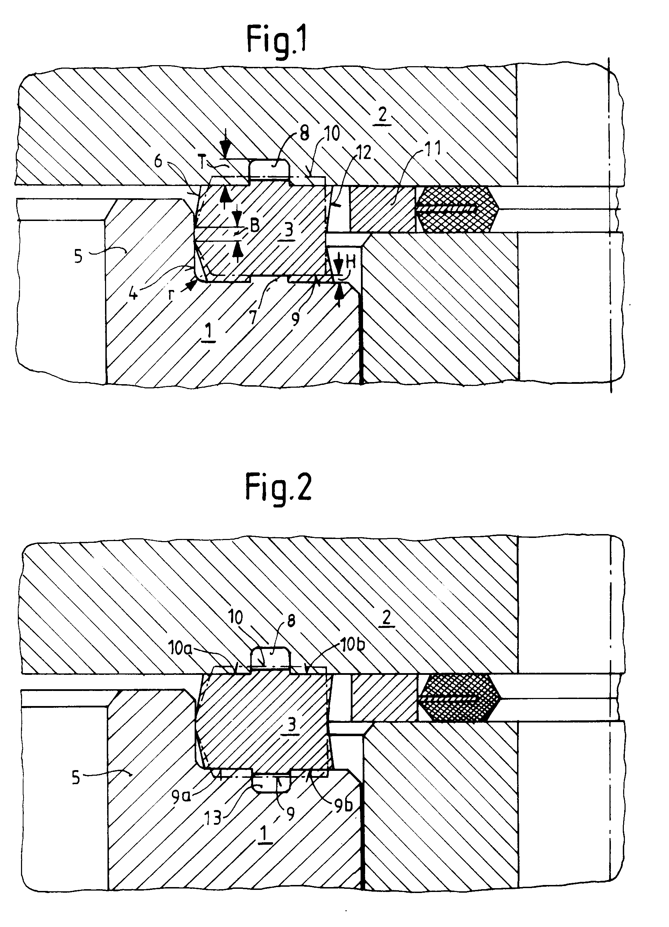

Zur Abdichtung zwischen Zylinderlaufbüchse 1 und Zylinderkopf 2 ist ein Ring 3 als Brennraumdichtung vorgesehen. Der Ring 3 wird gegenüber einer Zentrierung 4 eines Feuerschutzbundes 5 der Zylinderlaufbüchse 1 zentriert. Erfindungsgemäß wird der Ring 3 nur in einem zylindrisch geformten Bereich "B" zentriert und nicht über die gesamte Breite seiner Innenfläche 6. Ausgehend vom Bereich "B" nimmt der Freiraum zwischen Zentrierung 4 und Innenfläche 6 kontinuierlich zu (Figur 1, 2, 3). Die Innenfläche 6 kann in diesem Bereich kegelförmig gestaltet sein. Der Kegelwinkel wird je nach Größe des Übergangsradius "r" zwischen Feuerschutzbund und Stirnfläche der Laufbüchse 1 so gewählt, daß der Ring 3 auch nach erfolgter Fließverformung plan aufliegt und nicht in den Bereich des Radius "r" eindringt. Hierdurch wird neben freier Verformbarkeit des Ringes 3 auch eine geringe Schwankung der von Ring 3 auf die Laufbüchse 1 übertragenen Kraft sichergestellt, da eine zusätzliche, bei hohen Toleranzen im Radiusbereich eintretende unerwünschte Sekundärverformung vermieden wird.

Um den Ring 3 plastisch zu verformen weist die Zylinderlaufbüchse 1 an ihrem oberen Rand einen kreisringförmigen Steg 7 und diesem konzentrisch gegenüberliegend der Zylinderkopf 2 eine ebenfalls kreisringförmige Nut 8 auf. Beim Anziehen der hier nicht dargestellten Zylinderkopfschrauben dringt der Steg 7 in eine erste Stirnfläche 9 ein, welche in ihrer Ausgangslage strichpunktiert dargestellt ist. Eine ebenfalls in der Ausgangslage strichpunktiert dargestellte zweite Stirnfläche 10 dringt unter der Kraft der Zylinderkopfschrauben in die Nut 8 ein und füllt diese teilweise aus. Der Fließvorgang wird durch eine in ihrer Dicke genau abgestimmte Restflächendichtung 11 beendet sobald die Dichtfläche des Zylinderkopfes 2 vollflächig zur Auflage gelangt ist. Die Konfiguration des deformierten Ringes 3 wird durch die ausgezogenen Linien repräsentiert. Man erkennt, wie sich der Ring 3 im Bereich seiner Stirnflächen 9 und 10 nach außen und innen verformt. Damit der Fließvorgang auf der Innenfläche 6 durch den Zentrierbund 4 der Laufbüchse 1 nicht behindert wird, ist diese gemäß Figuren 1, 2, 3 kegelförmig gestaltet. Dadurch kann sich der Ring 3 in den von der Verformung betroffenen Zonen frei dehnen, während er im Bereich "B" zuverlässig zentriert ist, ohne daß dadurch die Verformung behindert wird.

Da der Bereich "B" in einer von der Verformung nicht betroffenen Zone liegt kann das radiale Spiel zwischen Ring 3 und Zentrierung 4 sehr klein gehalten werden, wodurch die Zentrierung gegenüber einem Ring mit ausschließlich zylindrischer Innenfläche wesentlich verbessert werden kann, da in einem solchen Fall das radiale Spiel größer gehalten werden muß, um die plastische Verformung nicht zu behindern.

Durch die erfindungsgemäß gute Zentrierung wird zudem erreicht, daß die Verformung des Rings 3 vollkommen symmetrisch abläuft, was Dichtfunktion und gleichmäßige Krafteinleitung sicherstellt.

Um die gewünschte Fließcharakteristik und einen reproduzierbaren Spannungszustand in den plastisch verformten Zonen des Rings 3 zu gewährleisten werden aufgrund von Versuchen mit Stahlfließringen Flächenverhältnisse so gewählt, daß die erste Stirnfläche 9 (Bild 1) des Rings 3 mit dem Wert A1 ins Verhältnis gesetzt zu einer um die Ringfläche der Nut 8 reduzierten zweiten Stirnfläche 10 mit dem Wert A2 ein Verhältnis $\frac{A1}{A2} = \frac{3}{2}$ aufweist, und daß eine Ringfläche des Steges 7 mit dem Wert A3 ins Verhältnis gesetzt zu der um die Ringfläche der Nut 8 reduzierten zweiten Stirnfläche 10 mit dem Wert A2 ein Verhältnis $\frac{A3}{A2} = \frac{1}{2}$ aufweist. Die Ringflächen der Stirnfläche 9, welche nach der plastischen Verformung beiderseits des Steges 7 verbleiben, weisen etwa gleiche Breite auf. Ebenso weisen die Ringflächen der Stirnfläche 10, die nach der Verformung außerhalb der Nut 8 verbleiben etwa gleiche Breiten auf. Die Höhe "H" des Steges 7 ist so zu wählen, daß sich durch die relative Stauchung in diesem Bereich unter Berücksichtigung der Werkstoffeigenschaften des Ringes 3 ein plastischer Zustand einstellt, d. h., daß die Fließgrenze zuverlässig erreicht wird. Nach Vollauflage der ersten Stirnfläche 9 des Ringes 3 auf der Zylinderlaufbüchse 1 wird die Fließverformung auf Seite des Zylinderkopfes 2 fortgesetzt da durch die Nut 8 die zweite Stirnfläche 10 so auf die verbleibenden Anteile der zweiten Stirnfläche 10 vermindert wird, daß Fließverformung mit gewünschter Charakteristik sichergestellt ist.

Die vorgenannten Verhältniszahlen $\frac{A1}{A2} = \frac{3}{2}$ und $\frac{A3}{A2} = \frac{1}{2}$ gelten mit einer gewissen Streubreite für den Werkstoff Stahl mit ausgeprägter Dehnung. Z. B. beim Einsatz neuer Werkstoffe kann der Fachmann aufgrund der inhaltlichen Aussagen dieser Patentschrift bei gleicher Zielrichtung auch abweichende Flächenverhältniszahlen wählen. Auch diese sind durch diese Erfindung abgedeckt.

In Figur 2 ist eine alternative Lösung dargestellt. Der Ring 2 hat vor der Verformung die gleiche Formgebung wie in Figur 1. Anstelle des Steges 7 tritt eine kreisringförmige Aussparung 13, während im Zylinderkopf die aus Figur 1 bekannte Nut 8 verbleibt. Für die Flächenverhältnisse gilt, daß sowohl das Verhältnis der Fläche 10 zur Summe der Flächenanteile 10a und 10b, als auch das Verhältnis der Fläche 9 zur Summe der Flächenanteile 9a und 9b im Bereich 1 : 1 bis 3 : 2 liegt, wodurch die gewünschte Fließverformung auch bei Verwendung von Werkstoffen hoher Festigkeit (Stahl) mit jedoch nach wie vor großer Dehnung, die Verformung in den horizontalen Bereich der Spannungs-Dehungskennlinie ermöglicht, erzielt wird. Die umlaufenden Nuten stellen ferner einen radialen Formschluß sicher. Sämtliche Flächenanteile 9a, 9b, 10a, 10b der Stirnflächen 9 und 10 welche nach der plastischen Verformung beiderseits der Nuten 8 und 13 verbleiben, weisen etwa gleiche Breite auf.

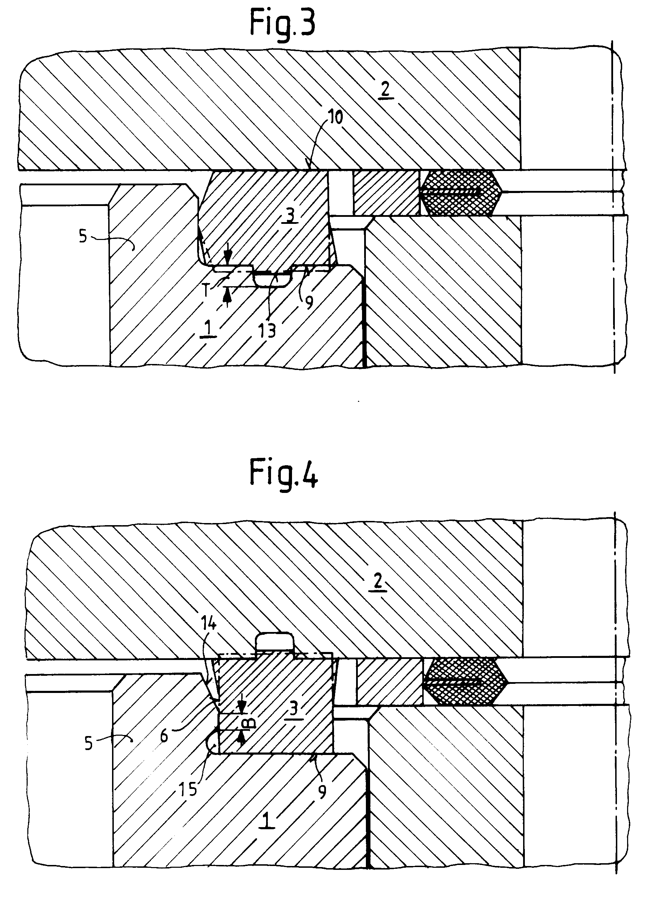

Eine weitere Variante ist in Figur 3 dargestellt, wo lediglich die Zylinderlaufbüchse 1 eine kreisringförmige Aussparung 13 aufweist. Der Ring 3 hat die gleiche Konfiguration wie in Figur 1 und Figur 2. Die Fläche der zweiten Stirnfläche 10 verhält sich zu der von der Verformung nich betroffenen Restfläche der ersten Stirnfläche 9 etwa wie 3 : 2. Die Tiefe "T" der Aussparung 13 ist wie die Tiefe "T" der Nut 8 in den Figuren 1 und 2 so zu wählen, daß am Grund der Nut 13 ein Spiel verbleibt, um den schon erwähnten hydrostatischen Spannungszustand zu vermeiden.

Figur 4 zeigt eine weitere Variante bei der der Bereich "B" zur Zentrierung des Rings 3 der Zylinderlaufbüchse 1 zugeordnet ist. Die Innenfläche 6 des Rings 3 ist zylindrisch ausgeführt. Das vom Bereich "B" ausgehende Spiel wird einerseits dadurch erreicht, daß der Feuerschutzbund 5 der Zylinderlaufbüchse 1 eine vorzugsweise kegelige Fase 14 aufweist. Andererseits wird das Spiel durch eine Hinterdrehung 15 realisiert. Auch diese Ausführung, deren Vorteil ein kostengünstiger Dichtring ist, gestattet eine ungehinderte Verformung der Innenfläche 6 des Ringes 3.

Bei allen Ausführungsformen nach den Figuren 1 bis 4 ist zu beachten, daß die von der Restflächendichtung 11 (Figur 1) unabhängige Höhe des Ringes 3 vor der plastischen Verformung so ausgelegt werden kann, daß er an der Dichtfläche zwischen Ring 3 und dem Zylinderkopf 2 Entlastungen durch innere Verformungen des Zylinderkopfbodens z. B. bei Belastung durch den Zünddruck elastisch folgen kann.

## Patentansprüche

1. Zylinderkopfdichtung und Zylinderlaufbüchse für Hubkolbenmaschinen, insbesondere Brennkraftmaschinen, wobei die Zylinderlaufbüchse (1) an ihrem einem Zylinderkopf (2) zugewandten Ende einen Feuerschutzbund (5) mit einer Zentrierung (4) aufweist und die vorzugsweise aus metallischem Werkstoff bestehende Brennraumdichtung konstanter Dicke beim Anziehen von Zylinderkopfschrauben eine plastische Verformung einer ersten und/oder zweiten Stirnfläche (9, 10) erfährt, wobei die plastische Verformung durch eine Restflächendichtung (11) begrenzt wird, sowie die Brennraumdichtung aus einem Ring (3) gebildet wird, welcher mit einer Spielpassung gegenüber der Zentrierung (4) geführt ist, dadurch gekennzeichnet, daß der Ring (3) an seiner Innenfläche (6) nur in einem zylindrisch geformten Bereich "B" gegenüber der Zentrierung (4) geführt ist, und daß sich der Freiraum zwischen Ring (3) und Zentrierung (4) ausgehend vorn Bereich "B" stetig vergrößert, sodaß der Ring (3) nach plastischer Verformung außerhalb eines Radius "r" zwischen dem Feuerschutzbund (5) und der Stirnfläche der Zylinderlaufbüchse (1) plan aufliegt.

2. Zylinderkopfdichtung und Zylinderlaufbüchse nach Anspruch 1, dadurch gekennzeichnet, daß der zylindrische Bereich "B" dem Ring (3) zugeordnet ist, daß der Freiraum zwischen Ring (3) und Zentrierung (4) als Kegelfläche ausgebildet ist, und daß im Bereich der plastischen Verformung des Ringes (3) die Zylinderlaufbüchse (1) einen kreisringförmigen Steg (7) und diesem gegenüberliegend der Zylinderkopf (2) eine kreisringförmige Nut (8) aufweist, wobei eine erste Stirnfläche (9) des Ringes (3) mit dem Wert A1 ins Verhältnis gesetzt zu einer um die Ringfläche der Nut (8) reduzierten zweiten Stirnfläche (10) mit dem Wert A2 ein Verhältnis $\frac{A1}{A2} = \frac{3}{2}$ aufweist, und daß eine Ringfläche des Steges (7) mit dem Wert A3 ins Verhältnis gesetzt zu der um die Ringfläche der Nut (8) reduzierten zweiten Stirnfläche (10) mit dem Wert A2 ein Verhältnis $\frac{A3}{A2} = \frac{1}{2}$ aufweist, wobei Nut (8) und Steg (7) etwa in der Mitte des Ringes (3) liegen.

3. Zylinderkopfdichtung und Zylinderlaufbüchse nach den Ansprüchen 1 und 2, dadurch gekennzeichnet, daß im Bereich der plastischen Verformung des Rings (3) die Zylinderlaufbüchse (1) eine kreisringförmige Aussparung (13) und ihr gegenüberliegend der Zylinderkopf (2) eine kreisringförmige Nut (8) gleicher Breite aufweist, und daß die an Zylinderkopf (2) bzw. Zylinderlaufbüchse (1) anliegenden Flächenanteile (10a und 10b), bzw. (9a und 9b) der zweiten und ersten Stirnflächen (10) und (9) des Ringes (3) derart ausgelegt sind, daß sowohl das Verhältnis der Fläche (10) zur Summe der Flächenanteile (10a und 10b), als auch das Verhältnis der Fläche (9) zur Summe der Flächenanteile (9a und 9b) im Bereich 1 : 1 bis 3 : 2 liegt.

4. Zylinderkopfdichtung und Zylinderlaufbüchse nach den Ansprüchen 1 und 2, dadurch gekennzeichnet, daß im Bereich der plastischen Verformung des Rings (3) die Zylinderlaufbüchse (1) eine kreisringförmige Aussparung (13) aufweist und die dem Zylinderkopf (2) zugewandte zweite Stirnfläche (10) durchgehend plan ausgeführt ist, und daß sich die Fläche der zweiten Stirnfläche (10) zur Fläche der um die Fläche der Aussparung (13) reduzierten ersten Stirnfläche (9) wie 3 : 2 verhält.

5. Zylinderkopfdichtung und Zylinderlaufbüchse nach den Ansprüchen 1 und 4, dadurch gekennzeichnet, daß der zylindrische Bereich "B" der Zylinderlaufbüchse (1) zugeordnet ist, daß die Zylinderlaufbüchse (1) am Übergang von Bereich "B" zur ersten Stirnfläche (9) des Ringes (3) eine Hinterdrehung (15) aufweist und am Übergang vom Bereich "B" zum Zylinderkopf (2) der Feuerschutzbund (5) eine vorzugsweise kegelige Fase (14) bildet.

## Claims

1. A cylinder head gasket and a cylinder liner for reciprocating-piston engines, in particular internal-combustion engines, wherein the cylinder liner (1) has a fire-protection collar (5) and a centering member (4) on its end facing a cylinder head (2), and a first and/or second end surface (9, 10) of the combustion chamber gasket, being of constant thickness and preferably comprising metallic material, undergoes plastic deformation when cylinder head bolts are tightened, wherein the plastic deformation is limited by a residual surface gasket (11), and the combustion chamber gasket is formed from a ring (3) guided with a clearance fit relative to the centering member (4), characterised in that the inner surface (6) of the ring (3) is only guided relative to the centering member (4) in a cylindrically formed region "B", and in that the free space between the ring (3) and the centering member (4) steadily enlarges starting from the region "B", with the result that the ring (3) lies flat between the fire-protection collar (5) and the end surface of the cylinder liner (1) after plastic deformation outside a radius "r".

2. A cylinder head gasket and a cylinder liner according to claim 1, characterised in that the cylindrical region "B" is associated with the ring (3), in that the free space between the ring (3) and the centering member (4) is formed as a conical area, in that, in the region of the plastic deformation of the ring (3), the cylinder liner (1) has an annular rib (7) and the cylinder head (2) has an annular groove (8) lying opposite the said annular rib (7), wherein a first end surface (9) of the ring (3) having the value A1, in comparison with a second end surface (10) reduced by the annular surface of the groove (8) and having the value A2, is in the relationship $\frac{A1}{A2} = \frac{3}{2}$ , and in that an annular surface of the rib (7) having the value A3, in comparison with the second annular surface (10) reduced by the annular surface of the groove (8) and having the value A2, is in the relationship $\frac{A3}{A2} = \frac{1}{2}$ , the groove (8) and the rib (7) being located substantially in the centre of the ring (3).

3. A cylinder head gasket and a cylinder liner according to claims 1 and 2, characterised in that, in the region of the plastic deformation of the ring (3), the cylinder liner (1) has an annular recess (13) and the cylinder head (2) has an annular groove (8) of the same width lying opposite the said annular recess (13), and in that the surface portions (10a and 10b, 9a and 9b) of the second and first end surfaces (10 and 9) respectively of the ring (3) and abutting against the cylinder head (2) and cylinder liner (1) respectively are formed in such a manner that both the ratio of the surface (10) to the sum of the surface portions (10a and 10b) and the ratio of the surface (9) to the sum of the surface portions (9a and 9b) lies in the range 1:1 to 3:2.

4. A cylinder head gasket and a cylinder liner according to claims 1 and 2, characterised in that, in the region of the plastic deformation of the ring (3), the cylinder liner (1) has an annular recess (13) and the second end surface (10) facing the cylinder head (2) is flat throughout, and in that the ratio of the area of the second end surface (10) to the area of the first end surface (9) reduced by the surface of the recess (13) is 3:2.

5. A cylinder head gasket and a cylinder liner according to claims 1 and 4, characterised in that the cylindrical region "B" is associated with the cylinder liner (1), and in that the cylinder liner (1) has a recess (15) in the transition region between the region "B" and the first end surface (9) of the ring (3) and the fire-protection collar (5) forms a preferably tapered chamfer (14) in the transition region between the region "B" and the cylinder head (2).

**Revendications**

1. Joint de culasse et de chemise de cylindre pour moteurs à pistons alternatifs, notamment moteurs à combustion interne, la chemise de cylindre (1) ayant à son extrémité tournée vers la culasse (2), une collerette de protection contre le feu (5) avec un moyen de centrage (4), et le joint de la chambre de combustion, de préférence en matière métallique et d'épaisseur constante, subit lors du serrage des vis de la culasse, une déformation plastique au niveau d'une première et/ou seconde surface frontale (9, 10), la déformation plastique étant limitée par le joint de surface résiduel (11), le joint de la chambre de combustion étant formé d'un anneau (3) guidé avec une adaptation à jeu par rapport au moyen de centrage (4), caractérisé en ce que l'anneau (3) présente, sur sa surface intérieure (6) seulement, une zone 《 B 》 de forme cylindrique guidée par rapport au moyen de centrage (4), et en ce que la chambre libre entre l'anneau (3) et le moyen de centrage (4) augmente en permanence à partir de la zone 《 B 》 pour qu'après déformation plastique, l'anneau (3) s'appuie à plat au-delà du rayon 《 r 》 entre la collerette de protection contre le feu (5) et la surface frontale de la chemise de cylindre (1).

2. Joint de culasse et de chemise de cylindre selon la revendication 1, caractérisé en ce que la zone cylindrique 《 B 》 est associée à l'anneau (3) et l'espace libre entre l'anneau (3) et le moyen de centrage (4) est en forme de surface conique, et au niveau de la déformation plastique de l'anneau (3), la chemise de cylindre (1) présente une branche (7) en forme de cercle et, en regard de celle-ci, la culasse (2) comporte une rainure de forme circulaire (8), une première surface frontale (9) de l'anneau (3) étant mise en rapport à la valeur A1 avec une seconde surface frontale (10) de valeur réduite de la surface annulaire de la rainure (8), la valeur A2 selon le rapport $\frac{A1}{A2} = \frac{3}{2}$ , et une surface annulaire de nervure (7) est mise en rapport à la valeur A3 avec la seconde surface frontale (10) réduite de la surface annulaire de la rainure (8), selon la valeur A2 correspondant à un rapport $\frac{A3}{A2} = \frac{1}{2}$ , la rainure (8) et la nervure (7) se situant sensiblement au milieu de l'anneau (3).

3. Joint de culasse et de chemise de cylindre selon les revendications 1 et 2, caractérisé en ce que dans la zone de déformation plastique de l'anneau (3), la chemise de cylindre (1) présente une cavité (13) en forme d'anneau de cercle et, en regard de celle-ci, la culasse (2) comporte une rainure (8) en anneau de cercle de même largeur, et les parties de surface (10a et 10b, ou 9a et 9b), appliquées contre la culasse (2) ou la chemise de cylindre (1) en appartenant à la seconde et à la première surface frontale (10 et 9) de l'anneau (3), sont conçues pour qu'à la fois le rapport des surfaces (10) et de la somme des parties de surface (10a, 10b) correspondent également au rapport de la surface (9) découlant de la somme des parties de surface (9a et 9b) dans le rapport 1 : 1 et 3 : 2.

4. Joint de culasse et de chemise de cylindre selon les revendications 1 et 2, caractérisé en ce qu'au niveau de la déformation plastique de l'anneau (3), la chemise de cylindre (1) présente une cavité (13) en forme d'anneau de cercle et la seconde surface frontale (10), tournée vers la culasse (2), est plane et continue, tandis que la surface de la seconde face frontale (10) par rapport à la surface de la première face frontale (9) diminuée de la surface de la cavité (13) correspond au rapport 3 : 2.

5. Joint de culasse et de chemise de cylindre selon les revendications 1 et 4, caractérisé en ce que la plage cylindrique 《 B 》 est associée à la chemise de cylindre (1) et cette chemise (1) présente, au niveau de la transition vers la plage 《 B 》 de la première face frontale (9) de l'anneau (3), une partie en contre-dépouille (15) et, au passage de la zone 《 B 》 et de la culasse (2), la collerette de protection contre le feu (5) forme un congé (14) de préférence conique.

# Fig.1

# Fig.2

## Fig.3

## Fig.4